# EUROPEAN PATENT APPLICATION

(11) **EP 3 312 588 A1**
(43) Date of publication of application: **25.04.2018**
(21) Application number: 16194861.7
(22) Date of filing: 20.10.2016
(51) Int. Cl.: G01N 21/31

(54) **METHOD AND SENSOR FOR DETECTING THE PRESENCE OF MOLECULES WITH A DIPOLE MOMENT**

(71) Applicant: Chalmers Ventures AB, 412 96 Göteborg (SE)
(72) Inventor: FEIERABEND, Maja, 412 96 GÖTEBORG (SE); MALIC, Ermin, 412 96 GÖTEBORG (SE); BERHÄUSER, Gunnar, 10623 BERLIN (DE); KNORR, Andreas, 10623 BERLIN (DE)
(74) Representative: Awapatent AB

(57) **Abstract**

There is provided a method for detecting the presence of molecules (10) with a dipole moment, the method comprising: providing (S1) a two-dimensional layer of material (2) exhibiting optically inaccessible excitonic states; subjecting (S2) the layer of material (2) to an environment potentially comprising a concentration of molecules (10) with a dipole moment; applying (S3) light to a surface (3) of the layer of material (2); detecting (S4) an optical absorption spectrum of the layer of material (2); and identifying (S5), in the optical absorption spectrum, a first peak (12) ascribable to optically accessible excitonic states and a second peak (13) ascribable to optically inaccessible excitonic states, the second peak (13) being distinguishable from the first peak (12) and indicating the presence of molecules (10) with a dipole moment at the surface (3). There is also provided a sensor (1) for detecting presence of molecules (10) with a dipole moment.

## Description

### TECHNICAL FIELD

The present invention relates to a method and a sensor for detecting the presence of molecules with a dipole moment.

### BACKGROUND OF THE INVENTION

Sensors for detecting the presence of molecules are widely used in both industry and research. Such sensors may for example be used to identify the content of a gas, and prior art techniques usually rely on the observation of small energy shifts and intensity changes of optically allowed transitions caused by molecules that are attached to the sensor. However, these energy shifts and intensity changes are typically small and therefore difficult to observe, something which hampers the sensitivity and reliability of these techniques.

Further efforts aimed at finding innovative sensing techniques for detecting the presence of molecules are thus warranted. In particular, there is a need for sensors with increased sensing sensitivity. There is also a need for sensors that are reliable and/or inexpensive to manufacture.

### SUMMARY OF THE INVENTION

In view of the foregoing, and according to a first aspect, there is provided a method for detecting the presence of molecules with a dipole moment, the method comprising: providing a two-dimensional layer of material having an electronic band structure comprising a valence band, a first conduction band separated from the valence band by a first energy gap, such that the layer of material exhibits optically accessible excitonic states, and a second conduction band separated from the valence band by a second energy gap and a momentum gap, such that the layer of material exhibits optically inaccessible excitonic states; subjecting the layer of material to an environment potentially comprising a concentration of molecules with a dipole moment; applying light to a surface of the layer of material; detecting an optical absorption spectrum of the layer of material; and identifying, in the optical absorption spectrum, a first peak ascribable to optically accessible excitonic states and a second peak ascribable to optically inaccessible excitonic states, the second peak being distinguishable from the first peak and indicating the presence of molecules with a dipole moment at the surface.

According to a second aspect, there is provided a sensor for detecting presence of molecules with a dipole moment, the sensor comprising: a two-dimensional layer of material having an electronic band structure comprising a valence band, a first conduction band separated from the valence band by a first energy gap, such that the layer of material exhibits optically accessible excitonic states, and a second conduction band separated from the valence band by a second energy gap and a momentum gap, such that the layer of material exhibits optically inaccessible excitonic states; a light source arranged to apply light to a surface of the layer of material; a detector configured to detect an optical absorption spectrum of the layer of material resulting from light applied to the surface; and processing circuitry configured to identify, in said absorption spectrum, a first peak ascribable to optically accessible excitonic states and a second peak ascribable to optically inaccessible excitonic states, the second peak being distinguishable from the first peak and indicating presence of the molecules with a dipole moment at said surface.

By "two-dimensional" is meant that the surface properties of the material dominate over the volume properties of the material, so that the layer of material is highly sensitive to changes in the environment. By an excitonic state being "optically accessible" is meant that the excitonic state can be excited through optical excitation alone. By an excitonic state being "optically inaccessible" is meant that the excitonic state cannot be excited through optical excitation alone. Rather, excitation of an optically inaccessible excitonic state requires a transfer of momentum in addition to optical excitation. By "momentum" is here meant electronic center-of-mass momentum, unless otherwise stated.

Through simulations, the inventors have surprisingly found that optically inaccessible excitonic states in some materials provide a clear "optical fingerprint" and that this optical fingerprint can be used for the detection of a specific type of molecules, i.e. molecules with a dipole moment. When molecules with a dipole moment are attached to the surface of these materials, there is an additional peak in the optical absorption spectrum compared with when there are no such molecules attached to the surface. The additional peak is due to optically inaccessible excitonic states having been made accessible by the presence of the molecules on the surface. The additional peak is easy to detect, and molecules can be reliably detected over a wide temperature range with high sensitivity. Furthermore, sensors operating by this technique can be energy efficient and manufactured at a low cost.

The material may be adapted to allow non-covalent bonding between the surface and molecules with a dipole moment. Such a material (or layer) may be referred to as "functionalized". The electronic wave function of the material remains largely unaffected when molecules attach non-covalently to the surface, and this helps to make the sensing predictable and consistent. This also helps to make the sensing cost effective since the material is not destroyed by the molecules.

The layer of material may have a thickness of a few atomic layers. The thickness may for example be six atomic layers or less, such as five atomic layers, three atomic layers or one atomic layer (a so-called monolayer). It is possible to manufacture pieces of such layers having a large surface area per unit volume. A large surface area per unit volume makes the material highly sensitivity to changes in the environment, something which helps to improve the sensitivity of the sensing. It should be noted that the layer of material may have any thickness as long as the surface properties of the layer of material dominate over the volume properties of the layer of material.

The material may be a transition metal dichalcogenide. The material may for example be a tungsten-based transition metal dichalcogenide, such as tungsten disulfide (WS₂) or tungsten diselenide (WSe₂), or a molybdenum-based transition metal dichalcogenide. Such materials are advantageous for several reasons. For example, it is possible to make very thin layers of transition metal dichalcogenides, and thus to achieve a high surface area to volume ratio. Moreover, due to a direct band gap and a very strong Coulomb interaction between electrons and holes, monolayers of transition metal dichalcogenides exhibit efficient light-matter coupling and stable excitonic states. These properties are particularly pronounced in tungsten-based transition metal dichalcogenides, partly because these materials have dark excitonic states lying energetically below bright excitonic states.

It should be noted that the invention relates to all possible combinations of features recited in the claims.

### BRIEF DESCRIPTION OF THE DRAWINGS

The present invention will now be described in more detail with reference to the appended drawings.
Figure 1 shows schematically a sensor according to an example embodiment of the present invention.
Figure 2 shows schematically electronic dispersion relations. The label Eon the vertical axis represents electronic energy, and the label k on the horizontal axis represents electronic center-of-mass momentum.
Figure 3 shows schematically excitonic dispersion relations. The label E on the vertical axis represents excitonic energy, and the label Q on the horizontal axis represents excitonic center-of-mass momentum.
Figure 4 shows an optical absorption spectrum. The label A on the vertical axis represents absorption, and the label *E* on the horizontal axis represents energy.
Figure 5 shows a flowchart of a method for detecting molecules with a dipole moment.

### DETAILED DESCRIPTION OF CURRENTLY PREFERRED EMBODIMENTS

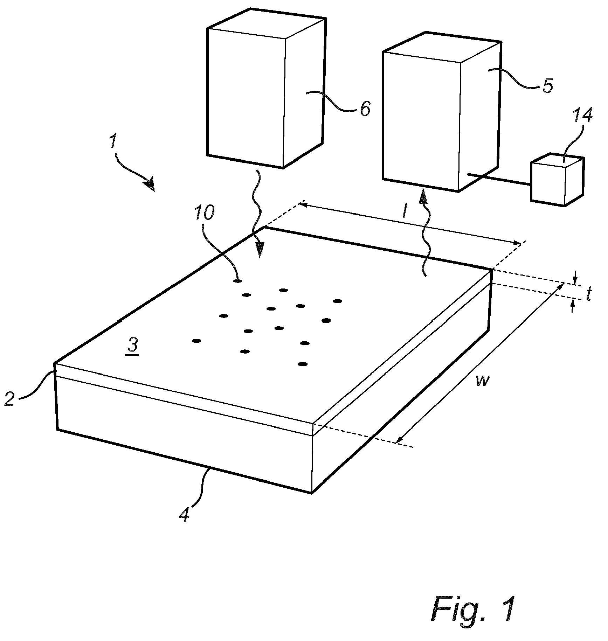

Figure 1 shows a sensor 1 that comprises a layer of material 2 with a surface 3 to which molecules with a dipole moment 10 may attach during sensing. The "layer of material" will henceforth be referred to as the "layer" for brevity. The sensor 1 also comprises a substrate 4 supporting the layer 2 and a light source 6 arranged to shine light onto the surface 3. The substrate 4 can for example be made of fused silica, silicon dioxide or diamond. The light source 6 may for example be a solid-state light source, such as a light-emitting diode. The light source 6 may be a laser. Further, the sensor 1 comprises processing circuitry 14 connected to a detector 5 which is arranged to receive light that emanates from the surface 3. The detector 5 may be an optical sensor, for example an electro-optical sensor. The detector 5 may or may not be integrated with the light source 6. The processing circuitry 14 may be integrated with the detector 5 or form part of a unit separate from the detector 5, for example a computer. The sensor 1 may comprise additional elements that are not illustrated in Figure 1, such as various types of electronic circuitry, input and output connections, a casing, etc.

The layer 2 has a rectangular shape, the width, length and thickness of the layer 2 being labeled by w, I and t, respectively. Hence, the surface area to volume ratio is given by the expression (Ixw)/(Ixwxt) = 1/t, the surface area being the area of the surface 3 and the volume being the volume of the layer 2. In the illustrated example, the thickness t of the material 2 is that of a three atomic layers, more precisely one layer of tungsten atoms sandwiched between two layers of sulfur atoms. The layer 2 may be referred to as two-dimensional. The material of the layer 2 is in this example tungsten disulfide.

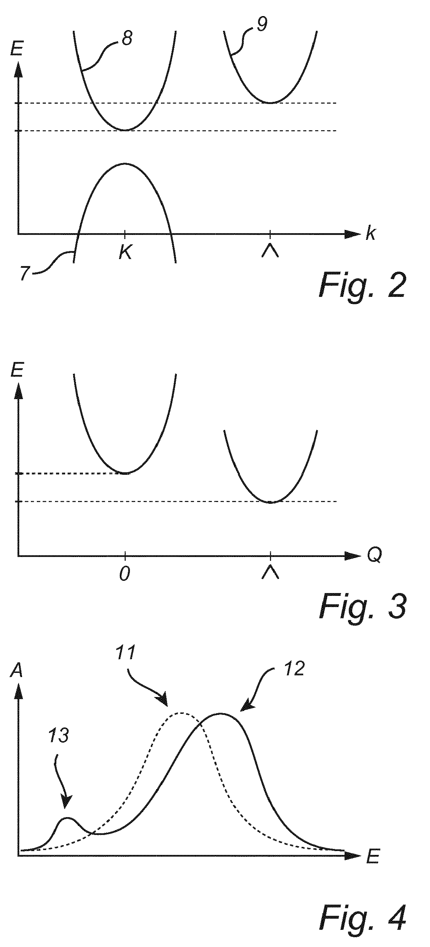

As can be seen in Figure 2, showing the electronic dispersion relation of the layer 2, the band structure of the layer 2 includes a valence band 7 and a first conduction band 8. The first conduction band 8 is separated from the valence band 7 by a first energy gap. The first energy gap is a direct band gap, i.e. there is a difference in potential energy, but not in momentum, between the highest-energy state of the valence band 7 and the lowest-energy state of the first conduction band 8. In the illustrated example, the first energy gap is approximately 2.8 eV. The highest-energy state of the valence band 7 and the lowest-energy state of the first conduction band 8 are both located at the K point of the Brillouin zone.

The band structure of the layer 2 also includes a second conduction band 9 which is separated from the valence band 7 by a second energy gap. The second energy gap is an indirect band gap, i.e. there is a difference in both potential energy and momentum between the highest-energy state of the valence band 7 and the lowest-energy state of the second conduction band 9. The lowest-energy state of the second conduction band 9 is located at the N point of the Brillouin zone. In the illustrated example, the second energy gap is larger than the first energy gap. The first energy gap is smaller than the second energy gap because the layer 2 is a direct semiconductor. The second energy gap is approximately 30 meV larger than the first energy gap in this example.

The valence band 7 and the first conduction 8 band together define a K valley. By "valley" is meant the energy region around a band minimum. The layer 2 exhibits optically accessible excitonic states "located" in the K valley. Accordingly, through optical excitation, an electron in the valence band 7 can move to the first conduction band 8, leaving a hole, or vacancy, in the valence band 7. Both the hole and the excited electron are located in the K valley. The electron and hole are bound through Coulomb interaction, thereby forming a type of quasi-particle which is conventionally referred to as an exciton. The excitonic state formed as a result of the optical excitation will henceforth be referred to as a bright exciton, reflecting that it can be created through optical excitation alone, without any transfer of momentum. The center-of-mass momentum of a bright exciton is zero, or close to zero.

The second conduction band 9 defines a Λ valley. The layer 2 exhibits optically inaccessible excitonic states located in the Λ valley. An optically inaccessible excitonic state, which is formed as a result of optical excitation and a transfer of momentum, will henceforth be referred to as a dark exciton. The dark excitons exhibit a non-vanishing center-of-mass momentum. The dark excitons are such that the excited electron and the hole are located in the Λ valley and at the K valley, respectively. In tungsten disulfide, and also in tungsten diselenide, the dark excitons associated with the Λ valley are lower in energy than the bright excitons associated with the K valley, as is illustrated in Figure 3 showing the excitonic dispersion relation of the layer 2. The difference in energy is approximately 60 meV in the illustrated example.

In order for an electron in the valence band 7 to move to the second conduction band 9, so that a dark exciton is created, a combination of optical excitation and momentum transfer is required. The momentum transfer can occur through the interaction between the electron and a static electric dipole field induced by a molecule 10 attached to the surface 3. The strength of the interaction depends on factors such as the direction and strength of the dipole moment of the molecule 10 and the distance between the surface 3 and the molecule 10. The strength of the interaction depends also on the concentration of molecules 10 attached to the surface 3.

From the foregoing it follows that molecules with a dipole moment can be detected using the sensor 1 by measuring the optical absorption spectrum that results from shining light, using the light source 6, onto the surface 3. If there are no molecules with a dipole moment attached to the surface 3, the optical absorption spectrum has a major peak 11 which can be ascribed to bright excitons. This major peak 11 is centered approximately at the excitation energy of the bright excitons. If, on the other hand, there are molecules with a dipole moment attached to the surface 3, the optical absorption spectrum has a major peak 12 and a minor peak 13. The major peak 12 is centered approximately at the bright exciton excitation energy and can be ascribed to bright excitons. The minor peak 13 is centered approximately at the dark exciton excitation energy and can be ascribed to dark excitons. The exact positions of the major peak 12 and the minor peak 13 depend for example on the strength of the interaction between the layer 2 and the attached molecules 10. In Figure 4, the dashed and solid lines show the optical absorption spectrum in the former and latter cases, respectively. As can be seen in Figure 4, the major peaks 11, 12 may be centered at different energies.

The dark and bright exciton peaks are in many materials centered at energies somewhere in the range from 1.5 to 2.5 eV. In tungsten disulfide, for example, the dark and bright exciton peaks are centered at energies somewhere in the range from 1.95 to 2.05 eV. It should be noted that, although Figure 4 shows the dark exciton peak 13 at a lower energy than the bright exciton peak 12, the dark exciton peak 13 can be centered at a lower energy or a higher energy than the bright exciton peak 12. Several factors affect the relative positions of the bright and dark exciton peaks 12, 13. Three examples of such factors are the choice of material of the layer 2, the choice of substrate 4, and the concentration of the molecules attached to the surface 3. Increasing the molecular coverage typically shifts the dark exciton peak 13 toward lower energies. Further, it should be noted that, usually, the larger the dipole moment of the molecules attached to the surface, the larger the splitting between bright and dark exciton peaks 12, 13 because of an increased exciton-molecule coupling. This fact may be used to determine the type of molecules that are attached to the surface. Still further, both peaks 12, 13 tend to be smoothed out with increased temperature, but it can be shown that the dark exciton peak 13 is clearly observable over a wide range of temperatures.

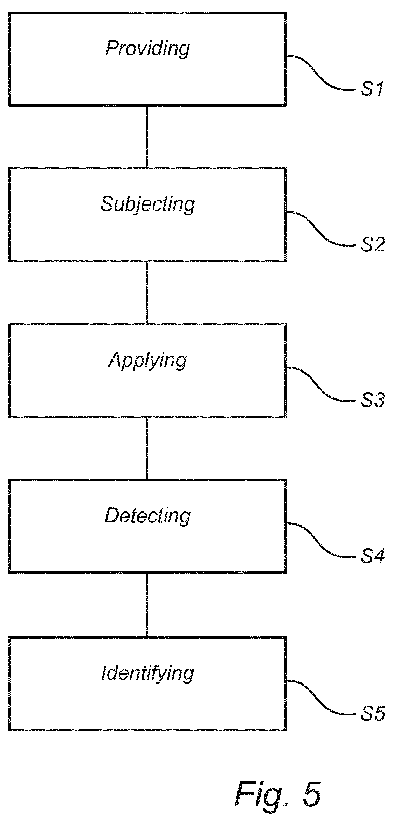

In view of the foregoing, the process of detecting molecules with a dipole moment using the sensor 1 may be summarized as follows: providing, the layer 2 in a step S1; subjecting the layer 2 to an environment potentially comprising molecules with a dipole moment in a step S2; applying light to the surface 3 in a step S3; detecting an optical absorption spectrum of the layer 2 in a step S4; and identifying, in a step S5, a bright excitonic peak and, if molecules with a dipole moment are attached to the surface 3, a dark excitonic peak. Figure 5 shows a flowchart of the steps S1 to S5.

Regarding step S5, it should be noted that the optical absorption spectrum of the layer 2 can be obtained in various ways. In the illustrated example, the light source 6 shines light onto the surface 3 and the detector 5 detects the light that is reflected from the surface 3. Thereby, it is possible to deduce the optical absorption spectrum of the layer 2 using the processing circuitry 14. Hence, the optical absorption spectrum may be obtained from a reflectance measurement. Another way of obtaining the optical absorption spectrum is to perform a transmittance measurement. In such a measurement, the light source 6 shines light onto the surface 3 and the detector 5 detects the light that is transmitted through the layer 2 and the substrate 4. The substrate 4 should in this case be at least partly transparent. Yet another way of obtaining the optical absorption spectrum is to perform a photoluminescence measurement. In such a measurement, the light from the light source 6 excites the layer 2, which has been chosen to be made of a photoluminescent material, and the detector 5 detects the light emitted by the layer 2 when the layer 2 relaxes. The term "optical absorption spectrum" is here meant to include the optical spectrum measured in such photoluminescence measurements.

It should be noted that the objective of step S5 is to detect an optical spectrum reflecting the excitonic structure of the layer 2, and the above-described measurements are examples of how to achieve this objective.

The person skilled in the art realizes that the present invention by no means is limited to the above-described example embodiment. Many modifications and variations are possible within the scope of the appended claims. For example, shape of the surface may be circular, irregular or in some other way different from the rectangular shape shown in Figure 1. Further, other materials than the ones mentioned above may be found suitable for the method. Still further, as mentioned above, some functionalization of the surface may be useful to attract a specific type of molecule, thereby making the method and sensor more purpose specific.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method for detecting the presence of molecules with a dipole moment, the method comprising:
providing (S1) a two-dimensional layer of material (2) having an electronic band structure comprising
a valence band (7),
a first conduction band (8) separated from the valence band (8) by a first energy gap, such that the layer of material (2) exhibits optically accessible excitonic states, and
a second conduction band (9) separated from the valence band (7) by a second energy gap and a momentum gap, such that the layer of material (2) exhibits optically inaccessible excitonic states;
subjecting (S2) the layer of material (2) to an environment potentially comprising a concentration of molecules with a dipole moment;
applying (S3) light to a surface (3) of the layer of material (2);
detecting (S4) an optical absorption spectrum of the layer of material (2); and
identifying (S5), in the optical absorption spectrum, a first peak (12) ascribable to optically accessible excitonic states and a second peak (13) ascribable to optically inaccessible excitonic states, the second peak (13) being distinguishable from the first peak (12) and indicating the presence of molecules with a dipole moment at said surface (3).

2. The method according to claim 1, wherein the layer of material (2) is adapted to allow non-covalent bonding between said surface (3) and molecules with a dipole moment.

3. The method according to claim 1 or 2, wherein the layer of material (2) has a surface area to volume ratio such that the surface properties dominate over the volume properties.

4. The method according to any of the preceding claims, wherein the layer of material (2) has a thickness of six atomic layers or less, alternatively three atomic layers or less.

5. The method according to any of the preceding claims, wherein the layer of material (2) has a thickness of a single layer of atoms.

6. The method according to any of the preceding claims, wherein the material is a transition metal dichalcogenide.

7. The method according to claim 6, wherein the material is a molybdenum-based transition metal dichalcogenide or a tungsten-based transition metal dichalcogenide, for example tungsten disulfide or tungsten diselenide.

8. A sensor (1) for detecting presence of molecules with a dipole moment, the sensor (1) comprising:
a two-dimensional layer of material (2) having an electronic band structure comprising
a valence band (7),
a first conduction band (8) separated from the valence band (7) by a first energy gap, such that the layer of material (2) exhibits optically accessible excitonic states, and
a second conduction band (9) separated from the valence band (7) by a second energy gap and a momentum gap, such that the layer of material (2) exhibits optically inaccessible excitonic states;
a light source (6) arranged to apply light to a surface (3) of the layer of material (2);
a detector (5) configured to detect an optical absorption spectrum of the layer of material (2) resulting from light applied by the light source (6) to the surface (3); and
processing circuitry (14) configured to identify, in said absorption spectrum, a first peak (12) ascribable to optically accessible excitonic states and a second peak (13) ascribable to optically inaccessible excitonic states, the second peak (13) being distinguishable from the first peak (12) and indicating presence of the molecules with a dipole moment at said surface (3).

9. The sensor (1) according to claim 8, wherein the layer of material (2) is adapted to allow non-covalent bonding between said surface (3) and molecules with a dipole moment.

10. The sensor (1) according to claim 8 or 9, wherein the layer of material (2) has a surface area to volume ratio such that the surface properties dominate over the volume properties.

11. The sensor (1) according to any of the claims 8 to 10, wherein the layer of material (2) has a thickness of six atomic layers or less, alternatively three atomic layers or less.

12. The sensor (1) according to any of the claims 8 to 11, wherein the layer of material (2) has a thickness of a single layer of atoms.

13. The sensor (1) according to any of the claims 8 to 12, wherein the material is a transition metal dichalcogenide.

14. The sensor (1) according to claim 13, wherein the material is a molybdenum-based transition metal dichalcogenide or a tungsten-based transition metal dichalcogenide, for example tungsten disulfide or tungsten tungsten diselenide.
